# EUROPEAN PATENT SPECIFICATION

(11) **EP 0 176 976 B1**
(45) Date of publication and mention of the grant of the patent: **20.10.1993**
(21) Application number: 85112258.0
(22) Date of filing: 27.09.1985
(51) Int. Cl.: G06F 3/06, G06F 5/06, G06F 12/04

(54) **Disk controller with shared address register**
Plattenspeichersteuergerät mit geteiltem Adressenregister
Appareil de commande de disque à registre d'adresse partagé

(30) Priority: 04.10.1984 US 657715
(43) Date of publication of application: 09.04.1986
(73) Proprietor: Bull HN Information Systems Inc., Wilmington Delaware (US)
(72) Inventor: Bradley, John W., W. Peabody - Mass. 01960 (US); Getson, Edward F., Jr., Lynn - Mass. 01905 (US); Cote, Bruce R., Dracut - Mass. 01826 (US)
(74) Representative: Falcetti, Carlo (IT)

(56) References cited:
- EP-A- 0 043 416
- EP-A- 0 088 982
- WO-A-79/00959
- WO-A-84/02411

## Description

This invention relates generally to the field of mass storage disk controllers, and more specifically to a disk controller with address register shared between a disk controller data random access memory and a data processing main memory.

A data processing system typically includes, in addition to a central processing unit, a main memory subsystem and a mass storage subsystem.

The mass storage subsystem includes a number of disk drives and a disk controller.

In the slower speed prior art systems typically having a data bit rate of 5 megahertz or less, the disk controller would assemble the data bits received from the disk device into data bytes. Blocks of data bytes would be transferred to main memory under control of the CPU.

As the disk technology improved, data bit rates in the order of 10 megahertz were feasible. To process data bytes at this rate, typical disk controllers would store bytes in a first in-first out memory.

Data bytes would be transferred to main memory as the data bits were being received from the disk drive and organized into bytes.

For the higher data bit rates of the order of 15 megahertz, the disk controller included a random access memory to store a block of data bytes. The data bytes were transferred to main memory after the entire block was stored in RAM.

For the block transfer between the data RAM and main memory, prior art disk controllers include a first address register for the data RAM and a second address register for main memory. Under firmware control, each address register is loaded with their respective address.

Information is transferred between the address location specified by the contents of the first address register and the address location specified by the contents of the second address register.

This technique balanced the hardware cost of the two registers against the read only memory (ROM) cost of the firmware to manipulate the contents of the two registers.

Since the cost of ROM's was high, designers tried to use more hardware to reduce the firmware stored in the ROM for the address generation. Accordingly, it was economical to provide two address registers.

However, the cost of ROM's has decreased greatly. Today's designs lean toward the greater use of firmware compared to the use of hardware in the design.

Accordingly, it is an object of the invention to provide an improved disk controller.

It is another object of the invention to provide a higher performance disk controller.

It is still another object of the invention to provide a disk controller having a reduced product and maintenance cost.

These objects are achieved by a disk controller where a single address register is provided, which is concurrently used for addressing both the buffer memory RAM of the disk controller as well as the data processing main memory of the system among which data transfer must be performed.

A block of data is transferred between main memory and a disk device under control of a disk controller. The disk controller includes a data random access memory (RAM) for storing the block of data received from main memory for transfer to the disk device, and the block of data received from the disk device for transfer to main memory.

The disk device reads and writes 8-bit bytes which are stored in or read from the RAM. Main memory stores two data bytes in each word location.

Generally, even if not neccessarily, the buffer memory RAM has a parallelism lesser than the one of the main memory.

Hence, as just said, the RAM may store an 8-bit byte at each addressable location and the main memory may store multiple bytes, two or more at each addressable location.

The arrangement of digital equipment with interoperating units having differing parallelism is known.

For instance, WO-A-7900959 discloses an enhancement circuit placed between a main memory and a peripheral subsystem which have a differing parallelism.

The enhancement circuit, by means of a plurality of address registers and data registers, provides an enhanced handling and data exchange between main memory and the peripheral subsystem at the trade off of relatively expensive hardware including separate address registers for each part and direction of the data transfer operation.

This trade off is avoided by the present invention.

A single address register located in the disk controller addresses both main memory and the RAM for the transfer of data bytes.

During the read from RAM and write into main memory operation, two data bytes are read from RAM on successive RAM read cycles. The first data byte is stored in a data output register A during a first RAM read cycle and the second byte is stored in a data output register B during a second RAM read cycle. The address register is incremented after each read cycle. During each first RAM read cycle, the address register points to the main memory location into which the contents of data output registers A and B are written and points to the location in RAM from where the next data byte of the block of data is read and stored in data output register A. Note that the contents of the address register addresses both RAM and main memory on each odd RAM read cycle.

During the read from main memory and write into RAM operation, the contents of the address register points to a word location storing two bytes which are transferred to data input register A and data input register B, respectively.

The contents of the address register are incremented to point to the location in RAM into which is written the data byte stored in data input register A during the first RAM write cycle. The contents of the address register are again incremented to point to the RAM location into which is written the contents of data input register B and also point to the location in main memory to read out the next data word for storing in data input register A and data input register B. Note that main memory is addressed during each even RAM write cycle.

The novel features which are characteristic of the invention are set forth with particularity in the appended claims. The invention itself, however, both as to organization and operation may best be understood by reference to the following description in conjunction with the drawings in which:
Figure 1 shows a block diagram of the overall system;
Figure 2 is a logic diagram of address register 10; and
Figure 3 is a logic diagram of disk controller 3.

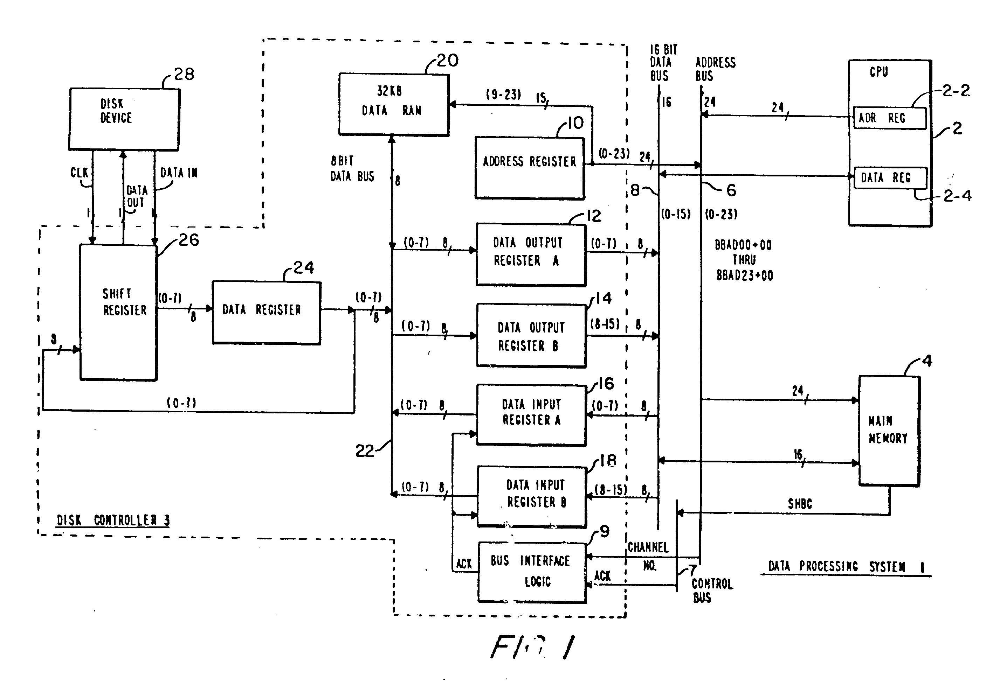

Figure 1 shows the data processing system 1 which includes & central processing unit (CPU) 2, a main memory 4 and a disk controller 3, all coupled in common to a 16-bit data bus 8 and a 24-bit address bus 6. A disk device 28, one of a number of disk drives, is coupled to disk controller 3.

The CPU 2 initiates a data transfer between the disk device 28 and main memory 4 by addressing main memory 4 by an address stored in address register 2-2. A configuration word is received in data register 2-4 and stored in an address location of a data random access memory (RAM) 20 at a location specified by an address stored in address register 10. A number of configuration words and an input/output (I/O) instruction are transferred to data RAM 20. The disk controller 3 uses the configuration and instruction words to condition the disk drive to transfer data bits stored in a specified sector on a track of a disk of disk device 28 to the disk controller 3.

Data bytes are read from the track 18 and applied to a "shift in" input terminal of a shift register 26. The bits of the data byte are clocked into shift register 26 by a clock signal from disk device 28.

The logic for storing a complete data byte in shift register 26 is well known in the art and does not deserve any particular consideration.

The data byte is transferred to a data register 24 for transfer over an 8-bit data bus 22 to a 32 KB data random access memory (RAM) 20 where it is stored in a byte location specified by bits 9 through 23 of the contents of an address register 10.

The data byte transfer from disk device 28 to data RAM 20 continues until an entire block of data bytes is stored in data RAM 20. The number of data bytes in the data block is determined by the configuration word previously received from the central processor unit (CPU) 2.

The configuration word includes a range number, which is the number of data bytes to be transferred during this input/output order response. The block transfer is complete when the range is decremented to ZERO.

At that time the data bytes stored in data RAM 20 are transferred to main memory 4 via a data output register A 12 which transfers the first data byte of a 2-byte word a data output register B 14 which transfers the second data byte and 16-bit data bus 8.

The address register 10 stores the location of the data byte read in data RAM 20 and the location of the 2-byte word stored in main memory 2.

For the data byte transfer from data RAM 20 to main memory 4, assume that data byte A is stored in location hexadecimal 0000, data byte B is stored in location hexadecimal 0001, data byte C is stored in location hexadecimal 0002, and data byte D is stored in location hexadecimal 0003. Initially the contents of address register 10 are set to point to location hexadecimal 0000. Data byte A is read from that location and stored in data output register A 12. The contents of address register 10 are then incremented to hexadecimal 0001. Data byte B is read from that location and stored in data output register B 14.

The contents of address register 10 are then incremented to hexadecimal 0002. This results in the outputs of data output register A 12 and data output register B 14, storing data bytes A and B, being stored in main memory 4 at location hexadecimal 0002.

Note that data RAM 20 is addressed by bits 9 through 23 of address register 10. Each byte location is addressable. However, in this example main memory 4 is word addressable. Therefore, bit 23 of address register 10 is ignored by main memory 4.

Data byte C is read from location hexadecimal 0002 and stored in data output register A 12 and the contents of address register 10 is incremented to hexadecimal 0003. Data byte D is read from data RAM 20 and stored in data output register B 14 and the contents of address register 10 incremented to hexadecimal 0004. The contents of data output register A 12 and data output register B 14 storing data bytes C and D are stored in location hexadecimal 0004 of main memory 4 which is the word location following location hexadecimal 0002.

Assume a main memory 4 to data RAM 20 transfer with data bytes E and F stored in word location hexadecimal 1000 and data bytes G and H stored in word location hexadecimal 1002 of main memory 4. Note that the low order bit 23 is dropped.

The contents of address register 10 are initialized to hexadecimal 1000. Main memory 4 will read out the contents of location hexadecimal 1000, data bytes E and F. Data byte E is stored in data input register A 16 via data bus 8 bits 0-7 and data byte F is stored in data input register B 18 via data bus 8 bits 8-15.

Main memory 4 signals disk controller 3 that the data word is available on data bus 8 via a second half bus cycle signal SHBC, a control bus 7, bus interface logic 9 and an acknowledge signal ACK which clocks the data word into data input register A 16 and data input register B 18. The disk control 3 is responsive to its channel number received from address bus 6.

The contents of address register 10 are incremented to hexadecimal 1001 and data byte E is stored in data RAM 20 at that location. For the next read cycle, the contents of address register 10 are incremented to hexadecimal 1002. Data RAM 20 will store data byte F in location hexadecimal 1002 and main memory 4 will read out data bytes G and H into data input register A 16 and data input register B 18, respectively.

As described above, data byte G will be stored in location hexadecimal 1003 of data RAM 20 and data byte H will be stored in location hexadecimal 1004 on subsequent write cycles.

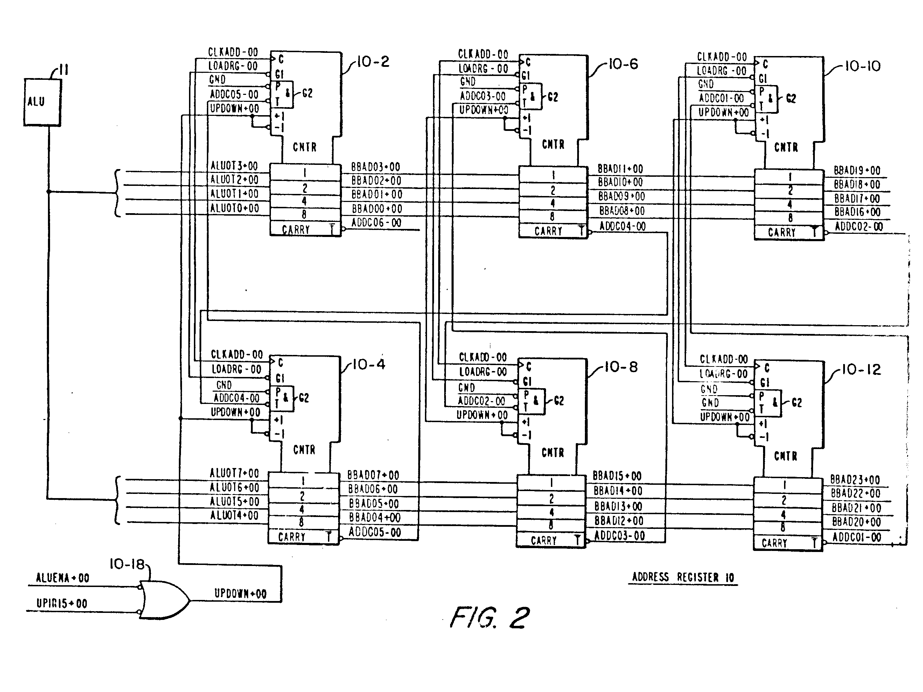

Figure 2 shows the detailed logic of the address register 10 which is made up of six counters 10-2, 10-4, 10-6, 10-8, 10-10 and 10-12. They are typically Texas Instruments 74LS169 circuits, described in "The TTL Data Book for Design Engineers", Second Edition, published 1976 by Texas Instruments Incorporated of Dallas, Texas.

The counters are loaded on three ALU 11 cycles by light signals ALUOT0+00 through ALUOT7+00. Counters 10-2 and 10-4 are loaded on the first cycle with the first byte. Counters 10-6 and 10-8 are loaded by signals BBAD00+00 through BBAD07+00 from counters 10-2 and 10-4 with the first byte while ALU 11 is loading the second byte into counters 10-2 and 10-4. Counters 10-10 and 10-12 are loaded on the third cycle with the first byte by signals BBAD08+00 through BBAD15+00 from counters 10-6 and 10-8. On that cycle counters 10-6 and 10-8 are loaded with the second byte and counters 10-2 and 10-4 are loaded from the ALU 11 with the third byte. The three bytes make up the 24-bit address. All 24 bits address main memory 4 and 15 bits, BBAD09+00 through BBAD23+00, address data RAM 20.

Counters 10-2, 10-4, 10-6, 10-8, 10-10 and 10-12 are loaded by a LOADRG-00 signal low applied to a G1 terminal on the rise of a CLKADD-00 signal applied to a clock terminal.

Carry signals ADDC01-00 through ADDC05-00 couple the six counters to enable normal incrementing and decrementing of the address register 10. The UPDOWN+00 signal applied to the +1 and -1 terminals indicates the increment or decrement operation, respectively. Note that a ground signal GND is applied to the P terminals of all six counters and the carry signal is applied to the T terminals of the five high order counters. A counter will increment on the rise of the CLKADD-00 signal when the signals applied to the P and T (G2) terminals are low.

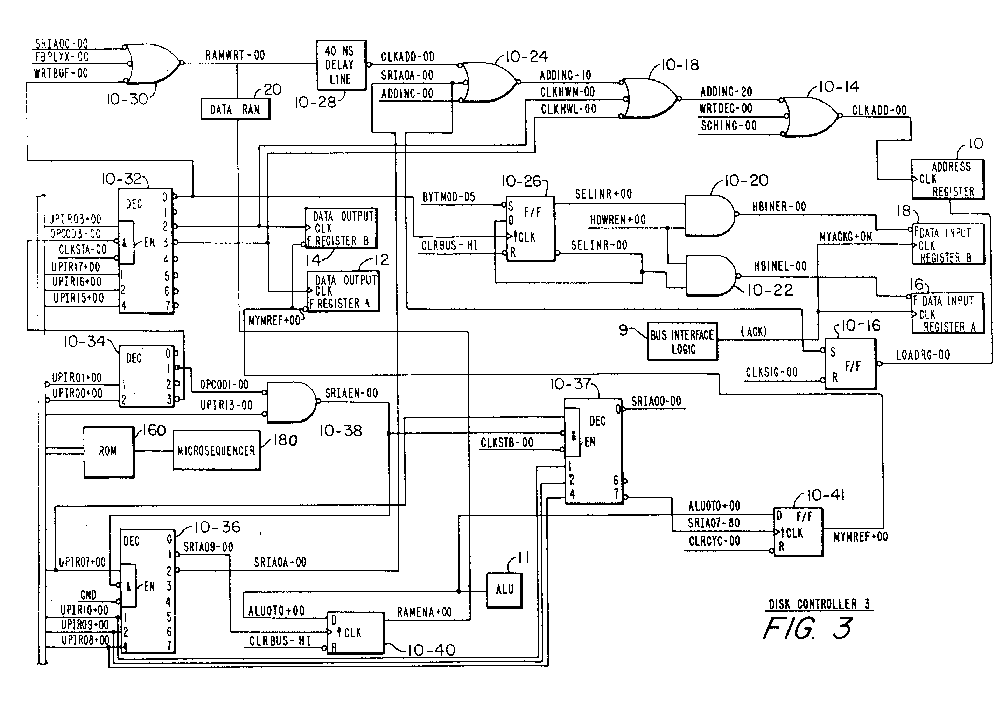

Figure 3 shows the detailed logic controlling address register 10 during the data RAM 20-main memory 4 data transfer.

The loading of the address register 10 is controlled by a microsequencer 180 which addresses a microprogram stored in a ROM 160. ROM 160 generates signals UPIR10+00, UPIR09+00 and UPIR08+00 which are applied to the 1, 2 and 4 select terminals of a decoder 10-36. Decoder 10-36 is enabled by signals UPIR07+10 and SRIAEN-00. Signals UPIR00+00 and UPIR01+00 applied to a decoder 10-34 generate signal OPCOD1-00 which is applied to a negative AND gate 10-38. Signal UPIR13-00 is applied to the other input terminal of negative AND gate 10-38. Therefore, signal UPIR01+00 high, signal UPIR00+00 low, signal UPIR13+00 low, signal UPIR08+00 low, signal UPIR09+00 high and signal UPIR10+00 low result in the decoder 10-36 output signal SRIA0A-00 low. Signal SRIA0A-00, therefore, sets a flop 10-16 to generate the load register signal LOADRG-00 which is applied to the six counters of address register 10.

Signal SRIA0A-00 low also generates the clock signal CLKADD-00 via a negative OR gate 10-24, a signal ADDINC-10 low, a negative OR gate 10-18, a signal ADDINC-20 low, a negative OR gate 10-14 and clock signal CLKADD-0D low, which is applied to address register 10. The data byte from ALU 11 is applied to the 1, 2, 4 and 8 input terminals of counters 10-2 and 10-4 and are stored in the counters on the rise of the clock signal CLKADD-00. This occurs at the end of the cycle when signal SRIA0A-00 goes high. Flop 10-16 is then reset by timing signal CLKSIG-00 to condition the address register 10 to receive the second data byte as described supra.

For the main memory 4 to data RAM 20 operation, address register 10 stores the address location of the two data bytes in main memory 4 which are to be stored in the same designated address locations in data RAM 20. Note that as described supra main memory 4 ignores the low order bit signal BBAD23+00, Figure 1, to designate the word address.

A signal MYACKG+OM generated by main memory 4 via bus interface logic 9 clocks the two data bytes read from main memory 4 and data bus 16 for storage in data input registers A 16 and B 18, respectively. Then under firmware control, a write buffer signal WRTBUF-00 is generated by a decoder 10-32 in order to condition or write data into data RAM 20.

ROM 16 generates signal UPIR03+00 high and signal UPIR15+00, UPIR16+00 and UPIR17+00 low. Also signals UPIR01+00 and UPIR00+00 high are applied to decoder 10-34 to generate signal OPCOD3-00 low. When clock signal CLKSTA-00 goes low, signal WRTBUF-00 goes low and is applied to a negative OR gate 10-30 thereby generating a RAMWRT-00 signal to initiate a data RAM 20 write cycle, as well as to clock input of a positive edge triggered flip-flop 10-26.

Since flop 10-26 is not set until the end of the cycle, output signal SELINR-00 which is applied to a NAND gate 10-20 is high. Also a signal HDWREN+00 is forced high by firmware to enable a read from data input registers A 16 and B 18. Output signal HBINEL-00 from NAND gate 10-22 enables the output of data input register A 16 to write the first of two data bytes in data RAM 20.

Flop 10-26 sets at the end of the first data RAM 20 write cycle on the rise of the WRTBUF-00 signal. The write buffer signal WRTBUF-00 is again generated by decoder 10-32. This generates a second write data RAM 20 cycle by generating signal RAMWRT-00. This time, however, flop 10-26 is set and signal SELINR+00 applied to a NAND gate 10-32 forces signal HBINER-00 low, thereby enabling the output data input register B 18 to write the second data byte in data RAM 20. Flop 10-26 may also be set at the end of the memory cycle on the rise of signal BYTMOD-05. Signal BYTMOD-05 sets flop 10-26 on a single byte transfer from main memory 4 to data input register B 18. Flop 10-26 may be reset by a system clear signal CLRBUS-HI, or it is reset on the raise of a subsequent WRTBUF-00 signal, being SELINR-00
The RAMWRT-00 signal also increments the address register 10 by generating the CLKADD-00 signal via a 40 nanosecond delay line 10-28, a CLKADD-0D signal, negative OR gate 10-24, signal ADDINC-10, negative OR gate 10-18, signal ADDINC-20, and negative OR gate 10-14. The address register 10 is incremented after storing each data byte and now stores the location of the next data word (two bytes) to be read from main memory 4.

For the data RAM 20 to main memory 4 operation, address register 10 stores the location in data RAM 20 of first byte to be transferred to main memory 4. A data RAM 20 read cycle is initiated by generating a RAM enable signal RAMENA+00. A flop 10-40 is set under microsequencer 180 control by ROM 160 generating signal SRIA09-00 from decoder 10-36; signal UPIR10+00 is high and signals UPIR08+00 and UPIR09+00 are low. Flop 10-40 is set on the rise of signal SRIA09-00 when signal ALUOT0+00 from ALU 11 is high.

During the data RAM 20 read cycle in which the first byte is read from data RAM 20, signal CLKHWM-00 is generated by the firmware from output terminal 2 of decoder 10-32. In this case, the decoder 10-32 is enabled as described supra; signal UPIR15+00 is low, signal UPIR16+00 is high, and signal UPIR17+00 is low. Signal CLKHWM-00 clocks the first data byte into data output register A 12. Address register 10 is incremented by signal CLKHWM-00 applied to negative OR gate 10-18 to generate signal CLKADD-00.

During the next data RAM 20 read cycle, the firmware generates signal CLKHWL-00 at output terminal 3 from decoder 10-32. Now signal UPIR15+00 is low and signals UPIR16+00 and UPIR17+00 are high.

Signal CLKHWL-00 clocks the second data byte into data output register B 14 and generates the CLKADD-00 signal via negative OR gate 10-18 to increment address register 10.

The contents of data output registers A 12 and B 14 are transferred to main memory 4 under firmware control via data bus 8 at the address stored in address register 10.

A decoder 10-37 generates a clock signal SRIA07-00 to set a flop 10-41 when signal ALUOT0+00 is high. Output signal MYMREF+00 applied to the F terminal of data output register A 12 and data output register B 14 enables the output signals placing the two data bytes on data bus 8. Signals UPIR07+00 through UPIR10+00 are high, signal SRIAEN-00 is low and clock signal CLKSTB-00 is low.

Also, the same address is applied to data RAM 20 to read out the next data byte into data output register A 12 by the firmware, again generating signal CLKHWL-00 and again incrementing the address register 10 as described supra.

The data input registers A 12 and B 14 and the data output registers A 16 and B 18 are 74S374 logic elements described in the aforementioned "TTL Data Book for Design Engineers".

A number of signals are shown in Figure 3 which are not a part of the invention but are included for completeness.

Signal SRIA00-00 applied to negative OR gate 10-30 from decoder 10-37 indicates an ALU 11 to data RAM 20 data transfer. Signal FBPLXX-0C applied to negative OR gate 10-30 indicates a disk device 28 to data RAM 20 data transfer. Signal ADDINC-00 applied to negative OR gate 10-24 gives the firmware a means of incrementing or decrementing the address register 10 by binary ONE during a data RAM 20 write operation.

Signal WRTDEC-00 applied to negative OR gate 10-14 increments the address register 10 on a data RAM 20 to disk device 28 data transfer. Signal SCHINC-00 increments the address register 10 during a disk device 28 search for the sector address.

Having shown and described a preferred embodiment of the invention, those skilled in the art will realize that many variations and modifications may be made to affect the claimed invention. Thus, many of the elements indicated above may be altered or replaced by different elements which will provide the same result.

In particular, having regard to recent technology trends it may be foreseen that the system memory 4 and the system data bus 8 have a parallelism of 4 bytes or more, instead of two, the data RAM 20 still retaining a parallelism of 1 byte or assuming a parallelism of 2 bytes.

Once the basic concept has been disclosed with reference to a main memory having a parallelism of 2 bytes and a data RAM having a parallelism of 1 byte, it becomes a matter of obvious adaption of the described interface logic to meet the requirements of such new situations.

Further in case the data RAM 20 has a preestablished parallelism and the main memory and system bus has a parallelism which is twice the one of RAM 20, the considerations expressed as to data words having a left data byte and an odd data byte are still valid, provided the expression "byte" is substituted by the expression "data unit" defined and intended as one or more bytes, depending on the parallelism of the data RAM 20.

## Claims

1. A disk controller (3) for transferring a block of data units between a disk drive (28) and a main memory (4) of a data processing system (1), said data processing system including a bus (6,8) coupling together said controller and said system for transfer of data units and main memory addresses between said controller and said main memory and for sending I/O transfer instructions to said controller by said data processing system, said controller including an addressible store (20) and register means (12,14,16,18), said register means holding at least a data unit to be transferred between said controller and said main memory,
said disk controller being characterized by comprising:
- an address register (10) for holding address contents, said contents being representative simultaneously of both the address of a location in said store (20) and the address of a location in said main memory (4), and
- control means (9,10-14 to 10-40,160,180) responsive to said I/O transfer instructions to either:
a) address said store (20) with the contents of said address register (10), read out from said store (20) into said register means (12,14,16,18) at least one data unit of said block and increment the contents of said address register
b) transfer over said bus (6,8) the contents of said address register and said at least one data unit for storing of said data unit in said main memory (4) at a location specified by said contents,
c) control the repeated alternate execution of operations a) and b) until all said data units in said block have been transferred over said bus;
or:
d) address said main memory (4) with the contents of said address register (10) through said bus, transfer over said bus at least one data unit of said block, from said main memory (4) to said register means (12,14,16,18) and increment the contents of said address register (10),
e) transfer said at least one data unit from said register means to said store (20) at a location of said store referenced by said contents of said address register (10),
f) control the repeated alternate execution of operations d) and e) until all said data units in said block have been transferred to said store (20),

2. The disk controller of claim 1 where said register means comprises an input register (16,18) and an output register (12,14).

3. The disk controller of claim 1 where said control means (9,10-14 to 10-40,160,180) is responsive to I/O transfer instructions to
- transfer over said bus (6,8) a plurality of data units at a time, at the occurrence of non consecutive contents of said address register (10),
- transfer, between said store (20) and said register means (12,14,16,18),a plurality of data units by a plurality of subsequent, consecutive single data unit transfer operations,
- increment the contents of said address register (10) after each of said subsequent, consecutive single data unit transfer operations.

## Patentansprüche

1. Plattenspeicher-Steuerungseinrichtung (3) zum Übertragen eines Blockes von Dateneinheiten zwischen einem Plattenspeicherlaufwerk (28) und einem Hauptspeicher (4) eines Datenverarbeitungssystemes (1), wobei das Datenverarbeitungssystem einen Bus (6, 8) aufweist, der die Steuerungseinrichtung und das Übertragungssystem der Dateneinheiten und Hauptspeicheradressen miteinander koppelt zwischen der Steuerungseinrichtung und dem Hauptspeicher, und zum Senden von I/O-Übertragungsinstruktionen zu der Steuerungseinrichtung durch das Datenverarbeitungssystem, wobei die Steuerungseinrichtung einen adressierbaren Speicher (20) und Registereinrichtungen (12, 14, 16, 18) aufweist, wobei die Registereinrichtungen zumindest eine Dateneinheit halten, die zwischen der Steuerungseinrichtung und dem Hauptspeicher übertragen werden soll,
wobei die Plattenspeichersteuereinrichtung gekennzeichnet ist, indem sie aufweist:
- ein Adreßregister (10) zum Halten der Adreßinhalte, wobei die Inhalte gleichzeitig repräsentativ sind für sowohl die Adresse einer Stelle in dem Speicher (20) als auch die Adresse einer Stelle in dem Hauptspeicher (4), und
- Steuereinrichtungen (9, 10-14 bis 10-40, 160, 180) die auf die I/O-Übertragungsinstruktionen antworten, um entweder:
a) den Speicher (20) mit dem Inhalt des Adreßregisters (10) zu adressieren, der von dem Speicher (20) in die Registereinrichtungen (12, 14, 16, 18) und zumindest eine Dateneinheit des Blockes ausgelesen wird, um die Inhalte der Adreßregister zu inkrementieren;
b) die Inhalte des Adreßregisters und der mindestens einen Dateneinheit zum Speichern der Dateneinheit in dem Hauptspeicher (4) an einer Stelle, die durch den Inhalt spezifiziert ist, über den Bus (6,8) zu übertragen;
c) die wiederholt abwechselnde Ausführung von Operationen a) und b) zu steuern bis alle Dateneinheiten in dem Block über den Bus übertragen worden sind;
oder:
d) den Hauptspeicher (4) mit den Inhalten des Adreßregisters (10) durch den Bus zu adressieren über den Bus zumindestens einer Dateneinheit des Blockes, von dem Hauptspeicher (4) zu den Registereinrichtungen (12, 14, 16, 18) zu übertragen und die Inhalte der Adreßregister (10) zu inkrementieren;
e) zumindestens eine Dateneinheit von den Registereinrichtungen zu dem Speicher (20) an eine Stelle des Speichers, angezeigt durch die Inhalte des Adreßregisters (10), zu übertragen;
f) die wiederholte abwechselnde Ausführung von Operationen d) und e) zu steuern, bis alle der Dateneinheiten in dem Block übertragen wurden zu dem Speicher (20).

2. Plattenspeicher-Steuereinrichtung gemaß Anspruch 1, wobei Registereinrichtungen ein Eingaberegister (16, 18) aufweisen und ein Ausgaberegister (12, 14).

3. Plattenspeicher-Steuereinrichtung gemaß Anspruch 1, bei der die Steuereinrichtungen (9, 10-14 bis 10-40, 160, 180) auf I/O-Übertragungsinstruktionen antworten, um
- über den Bus (6,8) eine Vielzahl von Dateneinheiten zu einem Zeitpunkt zu übertragen, beim Auftreten von nichtaufeinanderfolgenden Inhalten des Adreßregisters (10),
- zwischen dem Speicher (20) und den Registereinrichtungen (12, 14, 16, 18), eine Vielzahl von Dateneinheiten durch eine Vielzahl von folgenden, fortlaufenden einzelnen Dateneinheiten-Übertragungsoperationen zu übertragen,
- Inhalte des Adreßregisters (10) nach jeder der folgenden, fortlaufenden einzelnen Dateneinheit-Übertragungsoperationen zu inkrementieren.

## Revendications

1. Appareil de commande de disque (3) pour transférer un bloc d'unités de données entre une commande de disque (28) et une mémoire principale (4) d'un système de traitement de données (1), ledit système de traitement de données comportant un bus (6, 8) couplant ledit appareil de commande avec ledit système pour transférer des unités de données et des adresses de mémoire principale entre ledit appareil de commande et ladite mémoire principale et pour transmettre des instructions de transfert d'entrée/sortie (E/S) audit appareil de commande par ledit système de traitement de données, ledit appareil de commande incluant une mémoire adressable (20) et un moyen de registre (12, 14, 16, 18), ledit moyen de registre retenant au moins une unité de données qui est à transférer entre ledit appareil de commande et ladite mémoire principale,
ledit appareil de commande de disque étant caractérisé en ce qu'il comprend:
- un registre d'adresses (10) pour garder le contenu d'adresses, ledit contenu étant représentatif, simultanément,à la fois de l'adresse d'une position dans ladite mémoire (20) et de l'adresse d'une position dans ladite mémoire principale (4), et
- des moyens de commande (9, 10-14 à 10-40, 160, 180) sensibles auxdites instructions de transfert d' E/S pour soit :
a) adresser ladite mémoire (20) avec le contenu dudit registre d'adresses (10), extraire de ladite mémoire (20) vers ledit moyen de registre (12, 14, 16, 18) au moins une unité de données dudit bloc et incrémenter le contenu dudit registre d'adresses, soit
b) transférer sur ledit bus (6, 8) le contenu dudit registre d'adresses et ladite unité de données, au moins une, pour enregistrement , de ladite unité de données dans ladite mémoire principale (4) à une position spécifiée par ledit contenu, soit
c) commander l'exécution répétée en alternance des opérations a) et b) jusqu'à ce que toutes lesdites unités de données dudit bloc aient été transférées sur ledit bus ;
ou
d) adresser ladite mémoire principale (4) avec le contenu dudit registre d'adresses (10) à travers ledit bus, transférer sur ledit bus au moins une unité de données dudit bloc de ladite mémoire principlae (4) audit moyen de registre (12, 14, 16, 18) et incrémenter le contenu dudit registre d'adresses (10),
e) transférer ladite unité de données , au moins une, dudit moyen de registre vers ladite mémoire (20) à une position de ladite mémoire repérée par ledit contenu dudit registre d'adresse (10),
f) commander l'exécution répétée en alternance des opérations d) et e) jusqu'à ce que toutes lesdites unités de données dudit bloc aient été transférées à ladite mémoire (20).

2. Appareil de commande de disque selon la revendication 1 où ledit moyen de registre comprend un registre d'entrée (16, 18) et un registre de sortie (12, 14).

3. Appareil de commande de disque selon la revendication 1 où lesdits moyens de commande (9, 10-14 à 10-40, 160, 180) sont sensibles aux instructions de transfert d'E/S pour
- transférer sur ledit bus (6,8) une pluralité d'unités de données à un instant, à l'arrivée de contenus non consécutifs dudit registre d'adresses (10),
- transférer entre ladite mémoire (20) et ledit moyen de registre (12, 14, 16, 18) une pluralité d'unités de données par une pluralité d'opérations de transfert d'unités individuelles de données consécutives, subséquentes.
- incrémenter le contenu dudit registre d'adresses (10) après chacune desdites opérations de transfert d'unités individuelles de données consécutives , subséquentes.
